# EUROPEAN PATENT SPECIFICATION

(11) **EP 1 752 688 B1**
(45) Date of publication and mention of the grant of the patent: **14.01.2009**
(21) Application number: 05107368.2
(22) Date of filing: 10.08.2005
(51) Int. Cl.: F16H 59/04, F16H 59/10, F16H 61/24, G05G 9/047

(54) **Shift-by-wire gearshift device**
"Shift-by-wire"-Schaltvorrichtung
Dispositif de changement de vitesses du type "shift-by-wire"

(43) Date of publication of application: 14.02.2007
(73) Proprietor: Fico Triad S.A., 08100 MOLLET DEL VALLES (ES)
(72) Inventor: Dominguis Botella, Marc, 08790 Gelida (ES); Moreno Colom, Javier, 08519 Malla (ES)
(74) Representative: Barlocci, Anna

(56) References cited:
- EP-A- 0 620 385
- EP-A- 1 262 689
- DE-A1- 4 108 388
- DE-A1- 10 127 955
- DE-A1- 19 756 034
- DE-A1- 19 924 578
- FR-A- 2 803 418
- US-A- 5 852 953
- US-A1- 2002 056 334

## Description

### FIELD OF THE INVENTION

The present invention relates to a shift-by-wire gearshift device comprising a selector lever operable by a user for remotely controlling a motor vehicle transmission. Biasing means are provided to maintain one end of the selector lever in contact with a contoured surface for providing the user with a shifting feeling, and detection means comprising emitting means and receiving means.

### BACKGROUND ART

Drive-by-wire technology is currently known, for example, in latest generation transmission systems (shift-by-wire devices) in which conventional mechanical link (usually a cable) between two elements is replaced by electronic link. In the case of shift-by-wire devices, electronic link is provided between the selector lever and the transmission of the motor vehicle. In electronic gear operation, gear shift is requested by the driver using the selector lever. Detection means inform a control unit of the requested gear shift. Such request is processed by a control unit and a command signal is sent for actuating the clutch and the gear sequence according to the driver's request.

Some shift-by-wire devices combine the above mentioned detection means with means for providing the driver with the desired shift feeling as if it is a mechanical shifting device. Said feeling means may comprise biasing means acting on a follower member so that it is in contact with a contoured surface.

One of such devices is disclosed in US4912997, in which the shift selector mechanism includes detection and feeling features. In this case, the feeling feature is provided by a follower provided at the lower end of a selector lever for pre-loaded travel on a single cam track supported longitudinally on a rocker. The cam track is contoured to simulate shift effort and feel of conventional manual gear shifting operations. Detection feature is carried out by indicators operative for transmitting shift-by-wire signals to actuators thereby executing desired transmission gear selections. Position indicators are located on each rocker pivot axis and continuously monitor the rotational travel of each rocker pivot pin about its axis. A control module receives signals generated by the position indicators and incorporates memory and computer means adapted to indicate the instantaneous position of the follower as it is moved in the selected shift plane of the cam track. The indicators consist of two separate electrical angular position sensors (rotary angle instrument sensors) provided on a longitudinal axis and on a transverse axis.

Another example of shifting device for motor vehicle transmission is disclosed in US5852953, in which a gearshift lever is coupled with a control lug forming part of detection means having separate sensors. The control lug reflects a signal which is sent as a signal corresponding to the shift position of the gearshift lever to a control unit of the transmission. The feeling means comprises contoured surfaces over which the lower end of the lever is guided through spring-loaded rollers for simulating the positive feel of a conventional mechanical gearchange.

Yet another gear shifting apparatus combining both feeling and detecting features is disclosed in US5540114. Detection is carried out by means of photo-sensor arrangements rotatably engaged with a shift shaft and a select shaft for detecting a position of a shift lever, and a cam arrangement coupled to the shift shaft for completing a shifting operation of the shift lever in case of a half shifting and providing a shifting feeling to a driver. The feeling means comprises a ball urged by a spring over a recessed groove formed on a housing lower plate. A cam is fixed to one end of the shift shaft, and a roller is rotatably contacted with said cam. In the shifting operation, an electric signal corresponding to a position of the shift lever is output to a control unit from an optical sensor device.

US2002056334, which discloses all the features of the preamble of independent claim 1, refers to a shifting device for an automatic transmission having a shift lever with biasing means intended for maintaining one end of the lever in contact with a contoured surface and detection means comprising a magnet arranged on a side portion of a holder, separate from the lever.

EP1262689 refers to a device for controlling an automatic and sequential gearbox comprising a selection lever having a lower end that is biased on a contoured surface and a magnet, for detecting the lever position, fitted in a lateral surface of the assembly.

In the above mentioned prior art shift-by-wire gearshift devices feeling and detection features are carried out separately. Furthermore, detection feature in prior art devices is performed by separate sensors which do not form part of the selector lever, thus making the assembly more complex and cumbersome.

### SUMMARY OF THE INVENTION

The present invention provides a shift-by-wire gearshift device that is simpler and more compact than prior art gearshift devices. This is accomplished by providing detection means comprising emitting means and receiving means. The emitting means or the receiving means is attached to the end of the selector lever for detecting the position of the selector lever end on a contoured surface. In a preferred embodiment of the invention, the emitting means are the ones fitted in the selector lever end.

The detection means work in combination with the above mentioned feeling or haptic feature which, as stated below, is carried out through biasing means which maintain one end of the selector lever in contact with a contoured surface. Therefore, the selector lever end itself performs two functions, that is, to provide the shifting feeling to the user and to detect the lever position relative to the contoured surface. This contoured surface may be any suitable surface, for example, a 3D-relief surface, a non-flat or irregular surface having channels or grooves where the selector lever passes.

In some embodiments of the shift-by-wire gearshift device of the invention, the detection means work with a magnetic field in which case the emitting means comprise a magnet which may be overmolded within the selector lever end.

According to a further embodiment of the shift-by-wire gearshift device, the receiving means of said detection means include an electronic board that is fitted adjacent to said contoured surface, for example below said surface. The electronic board may be provided with sensors, such as Hall sensors, which detect variations in the magnetic field from the magnet attached to the lever end.

Other suitable detection means may be alternatively used, such as optical means, switches, etc. In the embodiment in which a magnet is used as an emitting means, the magnetic field emitted from the magnet varies as the position of the shift lever is varied, and this variation of the magnetic field is sensed by the Hall sensors in the electronic board. A command signal is then emitted to a transmission programmed electronic unit for remote gearchange.

Still in some embodiments of the shift-by-wire gearshift device of the invention, the detection means further include a metal plate (e.g. a ferromagnetic plate) that is coupled with the electronic board for enhancing the magnetic field.

According to the invention, the selector lever comprises a main shaft and a follower finger located at the lever end. The follower finger is displaced axially relative to the main shaft as it passes over the contoured surface, that is, as the finger end is "reading" the surface, due to the action of the biasing means. Biasing means act on the follower finger such that it is urged against the contoured surface. The biasing means may comprise, for example, a compression spring arranged outside and around the selector lever main shaft urging the follower finger downwardly against the contoured surface.

The follower finger is hollow so that the lower end of the selector lever main shaft may be inserted therein. Therefore, the shifting device may be fitted in standard levers only adapting finger and spring size to the lever main shaft outer diameter. By combining this along with an updated contoured surface (through a programmable software), the shifting device may be adapted to a wide variety of gearshift assemblies in most of the currently existing types of vehicles.

A high performance, improved shift-by-wire gearshift device is provided according to the invention, which performs four main functions:
- detecting the driver's wish;
- informing a transmission programmed electronic unit about the driver's wish;
- providing a haptically suitable shifting feeling to the driver corresponding to each position of the gearbox; and
- detecting the lever position relative to the contoured surface

There is provided a long-lasting, robust gearshift device having a compact configuration since a fewer number of parts is used. This is achieved by providing a selector lever having built-in detection means so that the lever itself provides both the feeling and the detection features. A further advantage of the invention is the lower cost of the gearshift device since the detection means may be installed in standard selector levers as they are included in the selector lever tip, within the finger, which fits the lower portion of the lever.

### BRIEF DESCRIPTION OF THE DRAWINGS

A particular embodiment of a shift-by-wire gearshift device according to the present invention will be described in the following, only by way of non-limiting example, with reference to the appended drawings, in which:
Fig. 1 is an elevational view of one embodiment of a shift-by-wire gearshift device according to the invention;
Fig. 2 is sectional view of the shift-by-wire gearshift device in Fig. 1 taken along line AA' in Fig. 4;
Fig. 3 is sectional view of the shift-by-wire gearshift device taken along line BB' in Fig. 4;
Fig. 4 is a top plan view of the embodiment of the shift-by-wire gearshift device in the above figures; and
Fig. 5 is an enlarged view of the gearshift device shown in Fig. 3 in which the housing has been removed for clarity.

### DETAILED DESCRIPTION OF EMBODIMENTS

The shift-by-wire gearshift device of the embodiment shown in the figures has been indicated as a whole by reference numeral 1. It comprises a selector lever 2 having a main shaft 5 (partly shown in the figures) that is linked to a housing 3 through a crosspiece 4a, 4b. Crosspiece 4a, 4b consists of a first shaft 4a hinged transversely to the main shaft 5 of the selector lever 2 and a pivotable body 4b hinged transversely to the main shaft 5 and to the first shaft 4a. Of course, other mechanical linkages may alternatively used, such as ball-joints or the like. The housing 3 has an upper opening 1a through which part of the selector lever 2 exits.

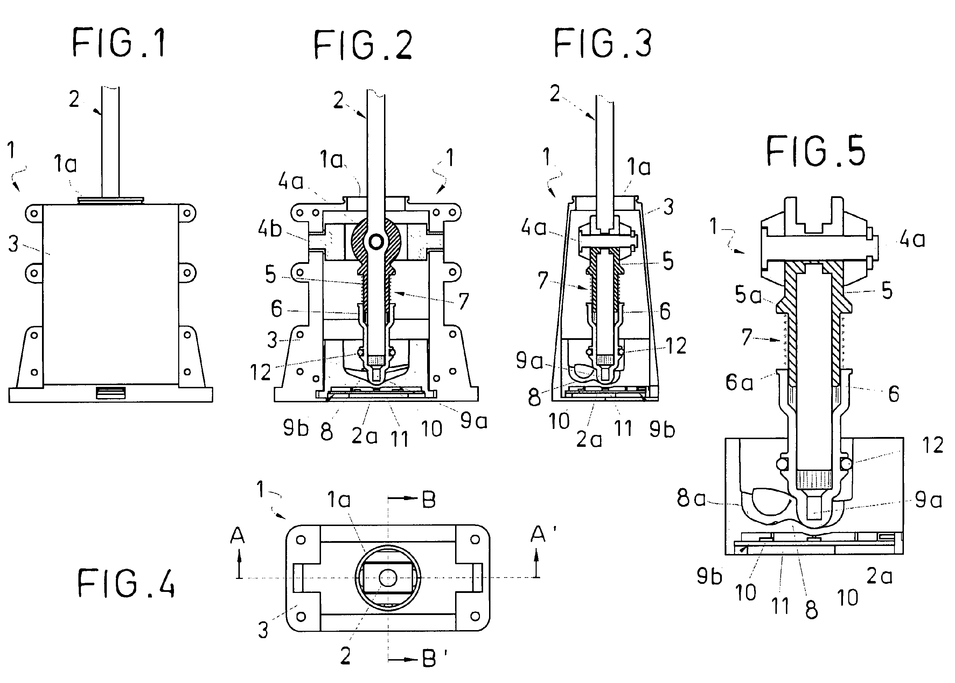

The selector lever 2 has a lower follower finger 6 fitted in the main shaft 5. The follower finger 6 may be clearly seen in the enlarged view of Fig. 5. The follower finger 6 is hollow so that the main shaft 5 may be properly inserted therein. The follower finger 6 may be displaced axially relative to the main shaft 5 of the lever 2. Biasing means 7 comprising a compression spring are provided between projections 5a, 6a that project out radially from the main shaft 5 and the follower finger 6, respectively. As stated above, the spring 7 is arranged between said projections 5a, 6a, outside and around the main shaft 5 of the selector lever 2 such that the spring 7 urges the follower finger 6 downwardly against a contoured surface 8 arranged at the bottom of the housing 1 in such a way that the selector lever tip 2a is always substantially in contact with said contoured surface 8. The contoured surface 8 is a 3D-relief surface having uneven grooves or channels 8a in which the selector lever tip 2a passes. This provides the user with a shifting feeling as the selector lever 2 is operated for remotely controlling the motor vehicle transmission.

The end portion of the follower finger 6 of the selector lever 2 is provided with a properly sized O-ring 12 working in compression for a proper end-of-travel feeling in each of the possible directions of the selector lever 2.

The shift-by-wire gearshift device 1 further comprises detection means comprising emitting means 9a and receiving means 9b for detecting the position of the selector lever tip 2a on the contoured surface 8.

In the embodiment shown, the emitting means 9a comprise a magnet that is attached to the selector lever 2, for example overmolded within the selector lever tip 2a. The magnet 9a generates a magnetic field strong enough to be detected by the receiving means 9b.

The receiving means 9b comprise an electronic board that is fitted below the contoured surface 8, at the bottom thereof, such as shown in Fig. 5 of the drawings. The electronic board is provided with a series of Hall sensors 10 arranged at the bottom of the grooves or channels 8a of the contoured surface 8. Variations in the magnetic field as the position of the selector lever tip 2a is varied are detected by sensors 10. A command signal is then emitted to a transmission programmed electronic unit (not shown) for remote gearchange.

In the embodiment shown, the detection means further include a metal plate 11, for example a ferromagnetic plate, that is coupled with the electronic board for enhancing the magnetic field from the magnet 9a.

Therefore, detection means (comprising the emitting and the receiving means 9a, 9b) work in combination with feeling means (provided by the selector lever tip 2a, the biasing means 7 and the contoured surface 8) when the selector lever 2 is operated by the user. Both feeling and detection functions are performed by the selector lever 2.

## Claims

1. Shift-by-wire gearshift device comprising a selector lever (2) operable by a user for remotely controlling a motor vehicle transmission, biasing means (7) to maintain one end (2a) of said selector lever (2) in contact with a contoured surface (8) for providing the user with a shifting feeling, and detection means comprising emitting means (9a) and receiving means (9b), one of said emitting means (9a) and receiving means (9b) being attached to said end (2a) of the selector lever (2) such that the position of the end (2a) of the selector lever (2) on said contoured surface (8) can be detected, **characterised in that** the selector lever (2) comprises a main shaft (5) and a follower finger (6), said finger (6) constituting said end (2a) of the selector lever (2) and being displaceable axially relative to said main shaft (5), and said biasing means (7) acting on the follower finger (6) such that the follower finger (6) is urged against the contoured surface (8).

2. Shift-by-wire gearshift device as claimed in claim 1, **characterised in that** the emitting means (9a) are fitted in said end (2a) of the selector lever (2).

3. Shift-by-wire gearshift device as claimed in claim 1 or claim 2, **characterised in that** said emitting means (9a) comprise a magnet.

4. Shift-by-wire gearshift device as claimed in claim 3, **characterised in that** said receiving means (9b) are an electronic board fitted adjacent to said contoured surface (8), said electronic board being provided with sensors (10) which detect variations in the magnetic field from said magnet.

5. Shift-by-wire gearshift device as claimed in claim 4, **characterised in that** said detection means further include a metal plate (11) coupled with said electronic board for enhancing the magnetic field.

6. Shift-by-wire gearshift device as claimed in claim 1, **characterised in that** said contoured surface (8) is a 3D-relief surface.

7. Shift-by-wire gearshift device as claimed in any of the preceding claims, **characterised in that** said biasing means (7) comprise a compression spring.

8. Shift-by-wire gearshift device as claimed in claim 7 **characterised in that** the lower end of the selector lever main shaft (5) is inserted into the follower finger (6), said compression spring being arranged outside and around the selector lever main shaft (5) urging the follower finger (6) against the contoured surface (8).

## Patentansprüche

1. "Shift-by-wire"-Schaltvorrichtung, enthaltend einen Wählhebel (2), der von einem Benutzer betätigt werden kann, um fernbedient ein Kraftfahrzeuggetriebe zu steuern, Vorspanneinrichtungen (7), die ein Ende (2a) des Wählhebels (2) mit einer profilierten Oberfläche (8) in Kontakt halten, um dem Benutzer ein Schaltgefühl zu geben, und Erfassungseinrichtungen, die Sendeeinrichtungen (9a) und Empfangseinrichtungen (9b) enthalten, wobei die Sendeeinrichtungen (9a) oder die Empfangseinrichtungen (9b) am Ende (2a) des Wählhebels (2) derart angebracht sind, das die Position des Endes (2a) des Wählhebels (2) auf der profilierten Oberfläche (8) erfasst werden kann, **dadurch gekennzeichnet, dass** der Wählhebel (2) eine Hauptwelle (5) und einen Mitnehmerfinger (6) enthält, wobei der Finger (6) das Ende (2a) des Wählhebels (2) bildet und axial relativ zur Hauptwelle (5) verschoben werden kann und die Vorspanneinrichtungen (7) auf den Mitnehmerfinger (8) derart einwirken, dass der Mitnehmerfinger (6) gegen die profilierte Oberfläche (8) gedrückt wird.

2. "Shift-by-wire"-Schaltvorrichtung nach Anspruch 1, **dadurch gekennzeichnet, dass** die Sendeeinrichtungen (9a) in das Ende (2a) des Wählhebels (2) eingepasst sind.

3. "Shift-by-wire"-Schaltvorrichtung nach Anspruch 1 oder 2, **dadurch gekennzeichnet, dass** die Sendeeinrichtungen (9a) einen Magnet beinhalten.

4. "Shift-by-wire"-Schaltvorrichtung nach Anspruch 3, **dadurch gekennzeichnet, dass** die Empfangseinrichtungen (9b) eine Schaltkarte sind, die benachbart der profilierten Oberfläche (8) angebracht sind, wobei die Schaltkarte mit Sensoren (10) ausgestattet ist, die Änderungen im Magnetfeld vom Magnet erfassen.

5. "Shift-by-wire"-Schaltvorrichtung nach Anspruch 4, **dadurch gekennzeichnet, dass** die Erfassungseinrichtungen weiterhin eine Metallplatte (11) enthalten, die mit der Schaltkarte verbunden sind, um das Magnetfeld zu verstärken.

6. "Shift-by-wire"-Schaltvorrichtung nach Anspruch 1, **dadurch gekennzeichnet, dass** die profilierte Oberfläche (8) eine 3D-Relief-Oberfläche ist.

7. "Shift-by-wire"-Schaltvorrichtung nach einem der vorhergehenden Ansprüche, **dadurch gekennzeichnet, dass** die Vorspanneinrichtungen (7) eine Feder enthalten.

8. "Shift-by-wire"-Schaltvorrichtung nach Anspruch 7, **dadurch gekennzeichnet, dass** das untere Ende der Wählhebel-Hauptwelle (5) in den Mitnehmerfinger (6) eingefügt ist, wobei die Druckfeder außerhalb und um die Wählhebel-Hauptwelle (5) angeordnet ist und den Mitnehmerfinger (6) gegen die profilierte Oberfläche (8) drückt.

## Revendications

1. Dispositif de changement de vitesses du type "shift-by-wire", comprenant un levier sélecteur (2) susceptible d'être actionné par un utilisateur pour commander à distance une transmission d'un véhicule à moteur, des moyens de sollicitation (7) pour maintenir une extrémité (2a) dudit levier sélecteur (2) en contact avec une surface contourée (8) pour donner à l'utilisateur une sensation de changement de vitesses, et des moyens de détection qui comprennent des moyens émetteurs (9a) et des moyens récepteurs (9b), l'un parmi lesdits moyens émetteurs (9a) et lesdits moyens récepteurs (9b) étant attaché à ladite extrémité (2a) du levier sélecteur (2) de telle sorte que la position de l'extrémité (2a) du levier sélecteur (2) sur ladite surface contourée (8) peut être détectée, **caractérisé en ce que** le levier sélecteur (2) comprend un arbre principal (5) et un doigt suiveur (6), ledit doigt (6) constituant ladite extrémité (2a) du levier sélecteur (2) et étant déplaçable axialement par rapport audit arbre principal (5), et lesdits moyens de sollicitation (7) agissent sur le doigt suiveur (6) de telle façon que le doigt suiveur (6) est forcé contre la surface contourée (8).

2. Dispositif de changement de vitesses du type "shift-by-wire" selon la revendication 1, **caractérisé en ce que** les moyens émetteurs (9a) sont logés dans ladite extrémité (2a) du levier sélecteur (2).

3. Dispositif de changement de vitesses du type "shift-by-wire" selon la revendication 1 ou 2, **caractérisé en ce que** lesdits moyens émetteurs (9a) comprennent un aimant.

4. Dispositif de changement de vitesses du type "shift-by-wire" selon la revendication 3, **caractérisé en ce que** lesdits moyens récepteurs (9b) sont formés par une carte électronique logée adjacente à ladite surface contourée (8), ladite carte électronique étant équipée de capteurs (10) qui détectent des variations dans le champ magnétique provenant dudit aimant.

5. Dispositif de changement de vitesses du type "shift-by-wire" selon la revendication 4, **caractérisé en ce que** lesdits moyens de détection incluent en outre une plaque en métal (11) couplée à ladite carte électronique pour renforcer le champ magnétique.

6. Dispositif de changement de vitesses du type "shift-by-wire" selon la revendication 1, **caractérisé en ce que** ladite surface contourée (8) est une surface en relief tridimensionnelle.

7. Dispositif de changement de vitesses du type "shift-by-wire" selon l'une quelconque des revendications précédentes, **caractérisé en ce que** lesdits moyens de sollicitation (7) comprennent un ressort de compression.

8. Dispositif de changement de vitesses du type "shift-by-wire" selon la revendication 7, **caractérisé en ce que** l'extrémité inférieure de l'arbre principal (5) du levier sélecteur est introduite dans le doigt suiveur (6), ledit ressort de compression étant agencé à l'extérieur et autour de l'arbre principal (5) du levier sélecteur et force le doigt suiveur (6) contre la surface contourée (8).
